# EUROPEAN PATENT APPLICATION

(11) **EP 3 321 840 A1**
(43) Date of publication of application: **16.05.2018**
(21) Application number: 17201742.8
(22) Date of filing: 14.11.2017
(51) Int. Cl.: G06F 21/85, G06F 21/75, H04L 9/00, G06F 21/60, H04K 1/00, H04L 1/00, H03M 13/11, G06F 13/362, G06F 13/40, G06F 11/10

(54) **BUS SECURITY PROTECTION METHOD AND APPARATUS**

(30) Priority: 15.11.2016 CN 201611036588
(71) Applicant: HUAWEI TECHNOLOGIES CO., LTD., Guangdong 518129 (CN)
(72) Inventor: LIU, Tao, Shenzhen, Guangdong 518129 (CN); LIU, Yu, Shenzhen, Guangdong 518129 (CN); YIN, Feifei, Shenzhen, Guangdong 518129 (CN)
(74) Representative: Pfenning, Meinig & Partner mbB

(57) **Abstract**

The present invention discloses a bus security protection apparatus, including: a first check module, configured to check operation data, to generate a first check code; a first conversion module, configured to perform an exclusive-OR logical operation on the operation data and a polarity indication signal, to obtain polarity reversal data; a first encryption/decryption module, configured to perform an exclusive-OR logical operation on the polarity reversal data and preset scrambling data, to obtain encrypted data; a bus, configured to transmit the first check code, the polarity indication signal, and the encrypted data; a second encryption/decryption module, configured to perform an exclusive-OR logical operation on the encrypted data and the preset scrambling data, to obtain decrypted data; a second conversion module, configured to perform an exclusive-OR logical operation on the decrypted data and the polarity indication signal, to obtain decrypted conversion data; and a second check module, configured to: check the decrypted conversion data, to generate a second check code, and determine, when the first check code is the same as the second check code, that data transmission on the bus is secure, so that security of the data transmission on the bus is improved.

## Description

### TECHNICAL FIELD

The present invention relates to the field of electronic technologies, and in particular, to a bus security protection method and apparatus.

### BACKGROUND

A bus (Bus) is a public communications trunk for transmitting information between various functional parts of a computer. The bus is a bundle of transmission lines. According to types of information transmitted by the computer, buses of the computer may be classified into a data bus, an address bus, and a control bus that are respectively configured to transmit data, a data address, and a control signal. In addition, a security protection mechanism exists on the bus at present, to ensure security of data transmission on the bus.

In an existing technical solution, protection is mainly performed in a TrustZone (Trustzone) manner. In this manner, permission control and access isolation are implemented by using an internal signal of an AMBA (Advanced Microcontroller Bus Architecture) bus, or a time sequence of a bus is modified and a mechanism such as a check is added by extending the bus. For example, an SOC (System on Chip) based on the AMBA (Advanced Microcontroller Bus Architecture, Advanced Microcontroller Bus Architecture) bus classifies parts on the bus into a security zone and a non-security zone. A master device in the security zone can access slave devices in all zones. A master device in the non-security zone can access only a slave device in the non-security zone. If the master device in the non-security zone accesses a slave device in the security zone, an error is reported to the bus and a CPU (Central Processing Unit, central processing unit) is instructed to perform corresponding risk processing.

However, in the existing technical solution, it can only be ensured that an illegal operation cannot take effect, but it cannot be ensured that data on the bus is not disclosed, because the data on the bus in this solution is a plaintext with low-level security. In addition, when an illegal operation occurs, software (Android software is disclosed) is required to ensure subsequent processing. High software dependence increases a possibility of being attacked.

### SUMMARY

Embodiments of the present invention provide a bus security protection method and apparatus, so as to improve security of data transmission on a bus, reduce a possibility of being attacked, and reduce software overheads.

According to a first aspect, the present invention provides a bus security protection apparatus, including a first processing device, a second processing device, and a bus, where the first processing device is connected to the second processing device by using the bus, the first processing device and the second processing device each include a write processing unit and a read processing unit, the write processing unit includes a first check module, a first conversion module, and a first encryption/decryption module, and the read processing unit includes a second check module, a second conversion module, and a second encryption/decryption module. An operation procedure of writing data by using the bus is as follows: First, the first check module is configured to check operation data, to generate a first check code; the first conversion module performs an exclusive-OR logical operation on the operation data and a randomly allocated polarity indication signal, to obtain polarity reversal data; and the encryption/decryption module performs an exclusive-OR logical operation on the polarity reversal data and preset scrambling data, to obtain encrypted data. Then, the bus transmits the first check code, the polarity indication signal, and the encrypted data in the write processing unit of the first processing device to the read processing unit of the second processing device. Finally, the second encryption/decryption module performs an exclusive-OR logical operation on the encrypted data and the preset scrambling data, to obtain decrypted data; the second conversion module performs an exclusive-OR logical operation on the decrypted data and the polarity indication signal, to obtain decrypted conversion data; and the second check module checks the decrypted conversion data, to generate a second check code, and determines, when it is checked that the first check code is the same as the second check code, that data transmission on the bus is secure. According to the bus security protection apparatus based on the AHB (Advanced High performance Bus) protocol, on the basis of making no change to an original time sequence of transmission on the bus, a data encryption mechanism is added to prevent data information from being disclosed and prevent data from being attacked by an error injection, a polarity reversal mechanism is used to maintain even power consumption of data transmission, and a data check is used to improve security of the data transmission on the bus.

In another possible design, the write processing unit further includes a first waveform generator, the first check module includes a first exclusive-OR gate logic circuit, the first conversion module includes a first selector and a first polarity reverser, and the first encryption/decryption module includes a second exclusive-OR gate logic circuit, where an output end of the first waveform generator is separately connected to a first input end and a second input end of the first exclusive-OR gate logic circuit and an input end of the first selector, a first output end of the first selector is connected to an input end of the first polarity reverser, a second output end of the first selector and an output end of the first polarity reverser are separately connected to an input end of the second exclusive-OR gate logic circuit, and an output end of the second exclusive-OR gate logic circuit is connected to an output end of the first exclusive-OR gate logic circuit. By using the circuit, a parity check, a polarity reversal, and scrambling may be performed on the operation data.

In another possible design, the read processing unit further includes a second waveform generator, the second encryption/decryption module includes a third exclusive-OR gate logic circuit, the second conversion module includes a second selector and a second polarity reverser, and the second check module includes a fourth exclusive-OR gate logic circuit and a third selector, where an output end of the second waveform generator is connected to an input end of the third exclusive-OR gate logic circuit, an output end of the third exclusive-OR gate logic circuit is connected to an input end of the second selector, a first output end of the second selector is connected to an input end of the second polarity reverser, an output end of the second polarity reverser is separately connected to a first input end of the third selector and a first input end and a second input end of the fourth exclusive-OR gate logic circuit, a second output end of the second selector is separately connected to the first input end of the third selector and the first input end and the second input end of the fourth exclusive-OR gate logic circuit, and an output end of the fourth exclusive-OR gate logic circuit is connected to a second input end of the third selector. By using the circuit, descrambling, a polarity reversal, and a parity check may be sequentially performed on the operation data, so that security of the data transmission on the bus is further determined.

In another possible design, the first processing device and the second processing device each further include a read/write enabling unit, where the read/write enabling unit is separately connected to the write processing unit and the read processing unit. Because a data read manner and a data write manner exist on the bus, a read/write manner of the operation data may be determined according to an input read/write enabling signal. If a data operation manner is writing data, the operation data is input to the write processing unit. If a data operation manner is reading data, the operation data is input to the read processing unit.

In another possible design, the read/write enabling unit includes a fourth selector, a fifth selector, a first trigger, and a second trigger, where an output end of the fourth selector is connected to an input end of the fifth selector, a first output end of the fifth selector is connected to one end of the first trigger, the other end of the first trigger is connected to the write processing unit, a second output end of the fifth selector is connected to one end of the second trigger, and the other end of the second trigger is connected to the read processing unit. By using the circuit, the read processing unit or the write processing unit may be enabled by determining a read/write enabling signal.

In another possible design, the first check code includes a first odd check code and a first even check code. M bits of the operation data are selected from N bits of the operation data, and odd parity check is performed on the M bits of the operation data and the polarity indication signal, to generate the first odd check code, where both N and M are positive integers greater than or equal to 1, and M is not greater than N; and Q bits of the operation data are selected from the N bits of the operation data, and even parity check is performed on the Q bits of the operation data and the polarity indication signal, to generate the first even check code, where both N and M are positive integers greater than or equal to 1, and M is not greater than N.

When the M bits of the operation data and the Q bits of the operation data are separately selected from the N bits of the operation data, it needs to be ensured that a data set of the M bits of the operation data and the Q bits of the operation data includes all data of the N bits of the operation data.

In another possible design, the second check code includes a second odd check code and a second even check code. M bits of the decrypted conversion data are selected from N bits of the decrypted conversion data, and odd parity check is performed on the M bits of the decrypted conversion data and the polarity indication signal, to generate the second odd check code, where the M bits of the decrypted conversion data and the M bits of the operation data have a same location in an N-bit sequence; and Q bits of the decrypted conversion data are selected from the N bits of the decrypted conversion data, and even parity check is performed on the Q bits of the decrypted conversion data and the polarity indication signal, to generate the second even check code, where the Q bits of the decrypted conversion data and the Q bits of the operation data have a same location in the N-bit sequence. The generated second odd check code is compared with the generated first odd check code, and the generated second even check code is compared with the generated first even check code, so that security of the data transmission on the bus is determined.

In another possible design, when it is checked that the first odd check code is the same as the second odd check code and the first even check code is the same as the second even check code, it is determined that the data transmission on the bus is secure. When it is checked that the first odd check code is different from the second odd check code or the first even check code is different from the second even check code, it is determined that the data transmission on the bus has a security vulnerability.

In another possible design, the bus includes 3 extended bits, and the 3 bits are respectively used to transmit the first odd check code, the first even check code, and the polarity indication signal. For example, the odd check code and the even check code are transmitted by using HRDATA [32] and HRDATA [34], and the polarity indication signal is transmitted by using HRDATA [33].

According to a second aspect, the present invention provides a bus security protection method, the method is used to implement steps performed by units or modules in the bus security protection apparatus in the first aspect, the method is implemented by hardware/software, and the hardware/software includes units corresponding to the foregoing functions.

According to a third aspect, the present invention provides a bus security protection device, including a master device, a slave device, and a bus, where the bus is configured to implement connections and communication between the master device and the slave device, and the master device and the slave device are configured to jointly implement steps performed by the bus security protection apparatus provided in the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic structural diagram of a bus security protection apparatus according to an embodiment of the present invention;
FIG. 2 is a schematic logical diagram of a parity check according to an embodiment of the present invention;
FIG. 3 is a schematic logical diagram of a polarity reversal according to an embodiment of the present invention;
FIG. 4 is a schematic logical diagram of data encryption according to an embodiment of the present invention;
FIG. 5 is a schematic flowchart of parity data authentication according to an embodiment of the present invention;
FIG. 6A and FIG. 6B are a schematic structural diagram of a bus security protection circuit according to an embodiment of the present invention;
FIG. 7 is a schematic flowchart of a bus security protection method according to an embodiment of the present invention; and
FIG. 8 is a schematic structural diagram of a bus security protection device according to an embodiment of the present invention.

### DESCRIPTION OF EMBODIMENTS

The following clearly and completely describes the technical solutions in the embodiments of the present invention with reference to accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

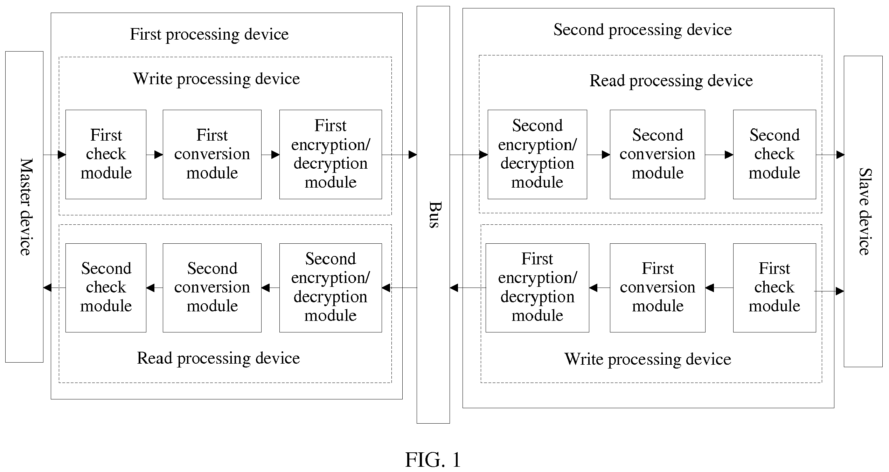

Referring to FIG. 1, FIG. 1 is a schematic structural diagram of a bus security protection apparatus according to an embodiment of the present invention. As shown in the figure, the apparatus in this embodiment of the present invention includes a first processing device, a second processing device, and a bus. The first processing device is connected to the second processing device by using the bus. The first processing device and the second processing device each include a write processing unit and a read processing unit. The write processing unit includes a first check module, a first conversion module, and a first encryption/decryption module. The read processing unit includes a second check module, a second conversion module, and a second encryption/decryption module.

During a bus write operation, a master device transmits data, and the following operation procedures are sequentially performed: generation of an odd check code and an even check code (the first check module), a polarity reversal (the first conversion module), and exclusive-OR scrambling (the first encryption/decryption module); and a slave device receives data, and the following operation procedures are sequentially performed: exclusive-OR descrambling (the second encryption/decryption module), another polarity reversal (the second conversion module), and a parity check (the the second check module). During a bus read operation, the slave device transmits data, and the following operation procedures are sequentially performed: generation of an odd check code and an even check code, a polarity reversal, and exclusive-OR scrambling; and the master device receives data, and the following operation procedures are sequentially performed: exclusive-OR descrambling, another polarity reversal, and a parity check. A specific execution procedure of the function modules is as follows.

The first check module is configured to check operation data, to generate a first check code.

In specific implementation, M bits of the operation data are selected from N bits of the operation data, and odd parity check is performed on the M bits of the operation data and the polarity indication signal, to generate a first odd check code. Both N and M are positive integers greater than or equal to 1, and M is not greater than N. Q bits of the operation data are selected from the N bits of the operation data, and even parity check is performed on the Q bits of the operation data and the polarity indication signal, to generate a first even check code. Both N and M are positive integers greater than or equal to 1, and M is not greater than N. The parity check may be a CRC4 (Cyclic Redundancy Check, cyclic redundancy check) check.

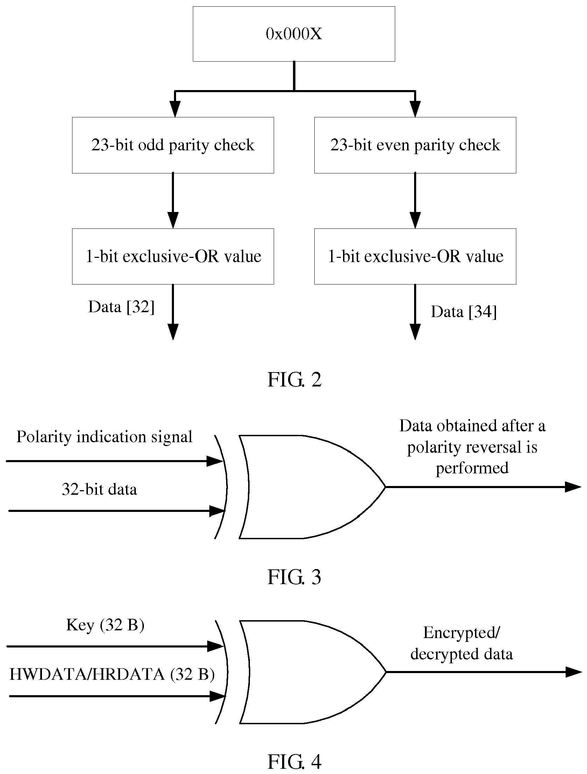

For example, as shown in FIG. 2, a parity check may be performed by ratio of 23:1. For example, 22-bit valid data is selected from 32-bit valid data, and odd parity check is performed on the 22-bit valid data and a polarity indication signal, where a sum of bits of the valid data and the polarity indication signal is 23 bits; and other 22-bit valid data is selected from the 32-bit valid data, and even parity check is performed on the 22-bit valid data and the polarity indication signal, where a sum of bits of the valid data and the polarity indication signal is 23 bits. During the bus write operation, an odd check code and an even check code are generated on a master device side, and a check is performed on a slave device side. During the bus read operation, an odd check code and an even check code are generated on the slave device side, and a check is performed on the master device side. Odd parity check is performed on bit data on bits (0, 2, 3, 5, 6, 8, 9, 11, 12, 14, 15, 17, 18, 20, 21, 23, 24, 26, 27, 29, 30, 31, and 33), and a generated first odd check code is transmitted by using data [32]. Even parity check is performed on bit data on bits (0, 1, 2, 4, 5, 7, 8, 10, 11, 13, 14, 16, 17, 19, 20, 22, 23, 25, 26, 28, 29, 31, and 33), and a generated first even check code is transmitted by using data [34]. Bit data on the 33^{rd} bit is the polarity indication signal.

The first conversion module is configured to perform an exclusive-OR logical operation on the operation data and the randomly allocated polarity indication signal, to obtain polarity reversal data.

In specific implementation, as shown in FIG. 3, when the first conversion module performs a polarity reversal operation, an exclusive-OR logical operation may be performed on a 1-bit polarity indication signal and 32-bit plaintext data. When the second conversion module performs another polarity reversal operation, an exclusive-OR logical operation may also be performed on the 1-bit polarity indication signal and the 32-bit plaintext data that is transmitted by using the bus. The polarity indication signal is transparently transmitted by using the 33rd bit that is of a bus signal and that is extended on the bus, so that it is ensured that the same polarity indication signal is used in the polarity reversal operation and the another polarity reversal operation. An added polarity reversal function may be used to randomly perform reversal processing on 0/1 information during data transmission, and power consumption is even in a process of transmission on the bus, so that an attacker cannot effectively discover the transmission process and the 0/1 information of data when attempting to analyze the power consumption. Therefore, a capability of resisting DPA (Differential Power Analysis) attack is improved.

The first encryption/decryption module is configured to perform an exclusive-OR logical operation on the polarity reversal data and preset scrambling data, to obtain encrypted data.

In specific implementation, as shown in FIG. 4, a same group of 32-bit scrambling data key may be randomly allocated to the first processing device and the second processing device, and an exclusive-OR logical operation is performed on the 32-bit scrambling data key and 32-bit polarity reversal data, to obtain encrypted data, so that data information is prevented from being disclosed. It should be noted that the polarity reversal data may be encrypted by using another algorithm.

The bus is configured to transmit the first check code, the polarity indication signal, and the encrypted data in the write processing unit of the first processing device to the read processing unit of the second processing device.

In specific implementation, 3 bits may be added on the basis of an original 32-bit data bit width of an AHB bus. The original 32-bit data bit width is used to transmit 32-bit encrypted data, and the 3 extended bits are respectively used to transmit the first odd check code, the first even check code, and the polarity indication signal.

The second encryption/decryption module is configured to perform an exclusive-OR logical operation on the encrypted data and the preset scrambling data, to obtain decrypted data.

In specific implementation, a processing method of the second encryption/decryption module is the same as the processing method of the first encryption/decryption module, and an exclusive-OR logical operation may be performed on the 32-bit scrambling data key and the 32-bit encrypted data, to obtain decrypted data.

The second conversion module is configured to perform an exclusive-OR logical operation on the decrypted data and the polarity indication signal, to obtain decrypted conversion data. A processing method of the second conversion module is the same as the processing method of the first conversion module.

The second check module is configured to: check the decrypted conversion data, to generate a second check code; and determine, when it is checked that the first check code is the same as the second check code, that data transmission on the bus is secure.

In specific implementation, the M bits of the decrypted conversion data are first selected from the N bits of the decrypted conversion data, and odd parity check is performed on the M bits of the decrypted conversion data and the polarity indication signal, to generate a second odd check code, where the M bits of the decrypted conversion data and the M bits of the operation data have a same location in the N-bit sequence; and the Q bits of the decrypted conversion data are selected from the N bits of the decrypted conversion data, and even parity check is performed on the Q bits of the decrypted conversion data and the polarity indication signal, to generate a second even check code, where the Q bits of the decrypted conversion data and the Q bits of the operation data have a same location in the N-bit sequence.

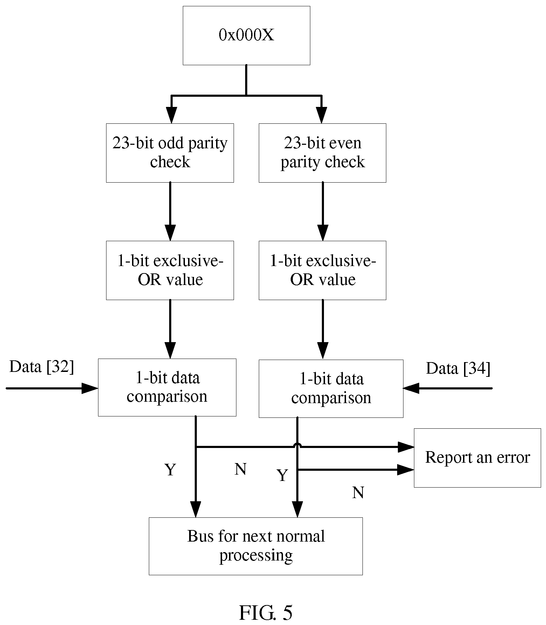

For example, as shown in FIG. 5, according to the same processing method of the first check module, 22-bit valid data is selected from 32-bit valid data, and odd parity check is performed on the 22-bit valid data and a polarity indication signal, where a sum of bits of the valid data and the polarity indication signal is 23 bits; and other 22-bit valid data is selected from the 32-bit valid data, and even parity check is performed on the 22-bit valid data and the polarity indication signal, where a sum of bits of the valid data and the polarity indication signal is 23 bits. Odd parity check is performed on bit data on bits (0, 2, 3, 5, 6, 8, 9, 11, 12, 14, 15, 17, 18, 20, 21, 23, 24, 26, 27, 29, 30, 31, and 33), to generate a second odd check code. Even parity check is performed on bit data on bits (0, 1, 2, 4, 5, 7, 8, 10, 11, 13, 14, 16, 17, 19, 20, 22, 23, 25, 26, 28, 29, 31, and 33), to generate a second even check code.

Then, it is separately determined, by means of comparison, whether the first odd check code is the same as the second odd check code and whether the first even check code is the same as the second even check code. When it is checked that the first odd check code is the same as the second odd check code and the first even check code is the same as the second even check code, it is determined that the data transmission on the bus is secure. When it is checked that the first odd check code is different from the second odd check code or the first even check code is different from the second even check code, an error is reported to a CPU or a system is directly reset. A parity check mechanism is added. Therefore, when data transmitted on a bus is attacked by a FIB (Focused Ion Beam, focused ion beam), a laser, or the like, whether data transmitted at two ends of the bus is consistent may be checked by means of a parity check, so that the data is prevented from being attacked by an error injection.

Optionally, the first processing device and the second processing device each further include a read/write enabling unit, where the read/write enabling unit is separately connected to the write processing unit and the read processing unit. Because a data read manner and a data write manner exist on the bus, a read/write manner of the operation data may be determined according to an input read/write enabling signal. If a data operation manner is writing data, the operation data is input to the write processing unit. If a data operation manner is reading data, the operation data is input to the read processing unit.

In conclusion, a main policy of the bus security protection apparatus is to add a protection IP between the master device and the slave device. An only modification to the bus is to increase a data bit width, and a time sequence bit width of an instruction signal is not changed.

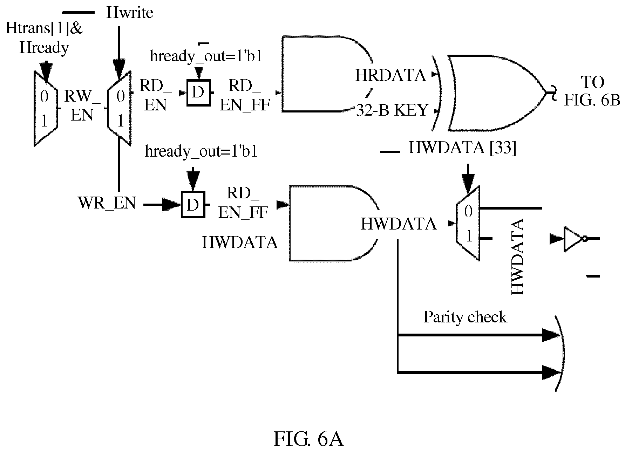

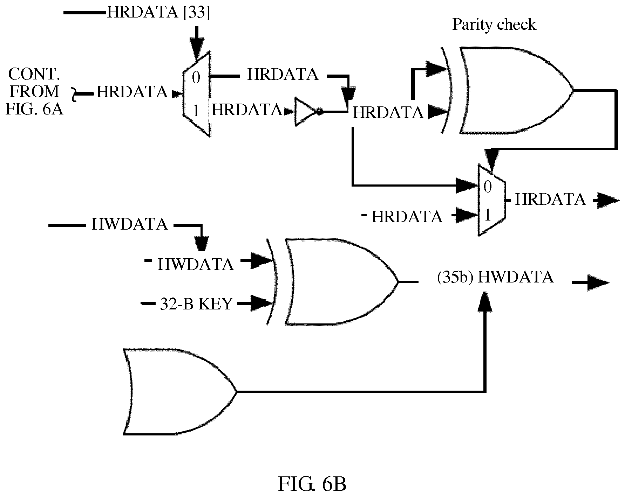

Steps performed by the foregoing function modules may be absolutely implemented by using hardware. As shown in FIG. 6A and FIG. 6B, FIG. 6A and FIG. 6B are a schematic structural diagram of a bus security protection circuit according to an embodiment of the present invention. The first processing device may be a master IP, and the second processing device may be a slave IP. The master IP and the slave IP have a same hardware structure. The hardware structure of the master IP or the slave IP is described below.

The write processing unit includes a first waveform generator, the first check module includes a first exclusive-OR gate logic circuit, the first conversion module includes a first selector and a first polarity reverser, and the first encryption/decryption module includes a second exclusive-OR gate logic circuit. The read processing unit further includes a second waveform generator, the second encryption/decryption module includes a third exclusive-OR gate logic circuit, the second conversion module includes a second selector and a second polarity reverser, and the second check module includes a fourth exclusive-OR gate logic circuit and a third selector. The read/write enabling unit includes a fourth selector, a fifth selector, a first trigger, and a second trigger.

An output end of the first waveform generator is separately connected to a first input end and a second input end of the first exclusive-OR gate logic circuit and an input end of the first selector, a first output end of the first selector is connected to an input end of the first polarity reverser, a second output end of the first selector and an output end of the first polarity reverser are separately connected to an input end of the second exclusive-OR gate logic circuit, and an output end of the second exclusive-OR gate logic circuit is connected to an output end of the first exclusive-OR gate logic circuit.

An output end of the second waveform generator is connected to an input end of the third exclusive-OR gate logic circuit, an output end of the third exclusive-OR gate logic circuit is connected to an input end of the second selector, a first output end of the second selector is connected to an input end of the second polarity reverser, an output end of the second polarity reverser is separately connected to a first input end of the third selector and a first input end and a second input end of the fourth exclusive-OR gate logic circuit, a second output end of the second selector is separately connected to the first input end of the third selector and the first input end and the second input end of the fourth exclusive-OR gate logic circuit, and an output end of the fourth exclusive-OR gate logic circuit is connected to a second input end of the third selector.

An output end of the fourth selector is connected to an input end of the fifth selector, a first output end of the fifth selector is connected to one end of the first trigger, the other end of the first trigger is connected to the write processing unit, a second output end of the fifth selector is connected to one end of the second trigger, and the other end of the second trigger is connected to the read processing unit.

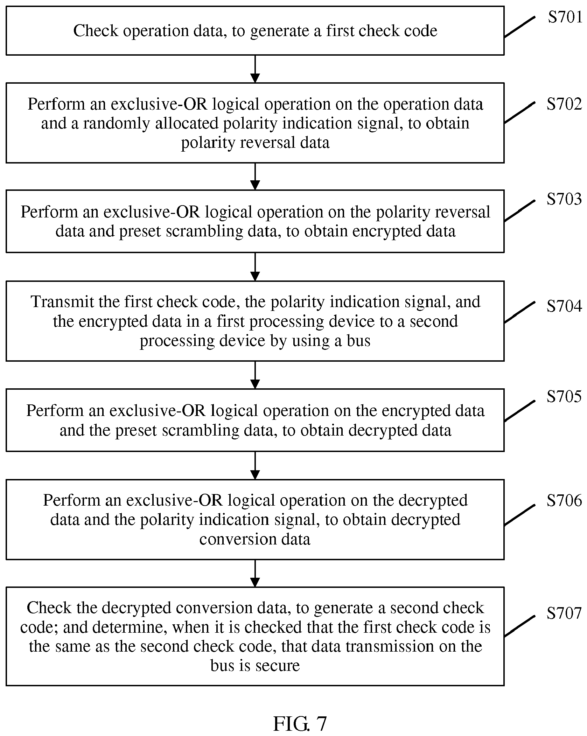

As shown in FIG. 7, FIG. 7 is a schematic flowchart of a bus security protection method according to an embodiment of the present invention. As shown in the figure, the method in this embodiment of the present invention includes the following steps.

During a bus write operation, a master device transmits data, and the following operation procedures are sequentially performed: generation of an odd check code and an even check code, a polarity reversal, and exclusive-OR scrambling; and a slave device receives data, and the following operation procedures are sequentially performed: exclusive-OR descrambling, another polarity reversal, and a parity check. During a bus read operation, the slave device transmits data, and the following operation procedures are sequentially performed: generation of an odd check code and an even check code, a polarity reversal, and exclusive-OR scrambling; and the master device receives data, and the following operation procedures are sequentially performed: exclusive-OR descrambling, another polarity reversal, and a parity check. A specific execution procedure of function modules is as follows.

S701. Check operation data, to generate a first check code.

In specific implementation, M bits of the operation data are selected from N bits of the operation data, and odd parity check is performed on the M bits of the operation data and the polarity indication signal, to generate a first odd check code. Both N and M are positive integers greater than or equal to 1, and M is not greater than N. Q bits of the operation data are selected from the N bits of the operation data, and even parity check is performed on the Q bits of the operation data and the polarity indication signal, to generate a first even check code. Both N and M are positive integers greater than or equal to 1, and M is not greater than N.

For example, as shown in FIG. 2, a parity check may be performed by ratio of 23:1. For example, 22-bit valid data is selected from 32-bit valid data, and odd parity check is performed on the 22-bit valid data and a polarity indication signal, where a sum of bits of the valid data and the polarity indication signal is 23 bits; and other 22-bit valid data is selected from the 32-bit valid data, and even parity check is performed on the 22-bit valid data and the polarity indication signal, where a sum of bits of the valid data and the polarity indication signal is 23 bits. During the bus write operation, an odd check code and an even check code are generated on a master device side, and a check is performed on a slave device side. During the bus read operation, an odd check code and an even check code are generated on the slave device side, and a check is performed on the master device side. Odd parity check is performed on bit data on bits (0, 2, 3, 5, 6, 8, 9, 11, 12, 14, 15, 17, 18, 20, 21, 23, 24, 26, 27, 29, 30, 31, and 33), and a generated first odd check code is transmitted by using data [32]. Even parity check is performed on bit data on bits (0, 1, 2, 4, 5, 7, 8, 10, 11, 13, 14, 16, 17, 19, 20, 22, 23, 25, 26, 28, 29, 31, and 33), and a generated first even check code is transmitted by using data [34]. Bit data on the 33^{rd} bit is the polarity indication signal.

S702. Perform an exclusive-OR logical operation on the operation data and a randomly allocated polarity indication signal, to obtain polarity reversal data.

In specific implementation, as shown in FIG. 3, a polarity reversal operation may be performed on operation data, and an exclusive-OR logical operation is performed on a 1-bit polarity indication signal and 32-bit plaintext data. The polarity indication signal may be transparently transmitted, for another polarity reversal operation, to a second processing device by using the 33^{rd} bit that is of a bus signal and that is extended on the bus, so that it is ensured that the same polarity indication signal is used in the polarity reversal operation and the another polarity reversal operation. An added polarity reversal function may be used to randomly perform reversal processing on 0/1 information during data transmission, and power consumption is even in a process of transmission on the bus, so that an attacker cannot effectively discover the transmission process and the 0/1 information of data when attempting to analyze the power consumption. Therefore, a capability of resisting DPA (Differential Power Analysis, differential power analysis) attack is improved.

S703. Perform an exclusive-OR logical operation on the polarity reversal data and preset scrambling data, to obtain encrypted data.

In specific implementation, as shown in FIG. 4, a same group of 32-bit scrambling data key may be randomly allocated to a first processing device and the second processing device, and an exclusive-OR logical operation is performed on the 32-bit scrambling data key and 32-bit polarity reversal data, to obtain encrypted data, so that data information is prevented from being disclosed.

S704. Transmit the first check code, the polarity indication signal, and the encrypted data in a first processing device to a second processing device by using a bus.

In specific implementation, 3 bits may be added on the basis of an original 32-bit data bit width of an AHB bus. The original 32-bit data bit width is used to transmit 32-bit encrypted data, and the 3 extended bits are respectively used to transmit the first odd check code, the first even check code, and the polarity indication signal.

S705. Perform an exclusive-OR logical operation on the encrypted data and the preset scrambling data, to obtain decrypted data.

In specific implementation, a method performed in S705 is the same as the method performed in S703, and an exclusive-OR logical operation may be performed on the 32-bit scrambling data key and the 32-bit encrypted data, to obtain decrypted data.

S706. Perform an exclusive-OR logical operation on the decrypted data and the polarity indication signal, to obtain decrypted conversion data.

In specific implementation, a method performed in S706 is the same as the method performed in S702, another polarity reversal operation may be performed on the decrypted data, and an exclusive-OR logical operation is performed on the 1-bit polarity indication signal and the 32-bit plaintext data.

S707. Check the decrypted conversion data, to generate a second check code; and determine, when it is checked that the first check code is the same as the second check code, that data transmission on the bus is secure.

In specific implementation, the M bits of the decrypted conversion data are first selected from the N bits of the decrypted conversion data, and odd parity check is performed on the M bits of the decrypted conversion data and the polarity indication signal, to generate a second odd check code, where the M bits of the decrypted conversion data and the M bits of the operation data have a same location in the N-bit sequence; and the Q bits of the decrypted conversion data are selected from the N bits of the decrypted conversion data, and even parity check is performed on the Q bits of the decrypted conversion data and the polarity indication signal, to generate a second even check code, where the Q bits of the decrypted conversion data and the Q bits of the operation data have a same location in the N-bit sequence.

For example, as shown in FIG. 5, according to the same processing method of a first check module, 22-bit valid data is selected from 32-bit valid data, and odd parity check is performed on the 22-bit valid data and a polarity indication signal, where a sum of bits of the valid data and the polarity indication signal is 23 bits; and other 22-bit valid data is selected from the 32-bit valid data, and even parity check is performed on the 22-bit valid data and the polarity indication signal, where a sum of bits of the valid data and the polarity indication signal is 23 bits. Odd parity check is performed on bit data on bits (0, 2, 3, 5, 6, 8, 9, 11, 12, 14, 15, 17, 18, 20, 21, 23, 24, 26, 27, 29, 30, 31, and 33), to generate a second odd check code. Even parity check is performed on bit data on bits (0, 1, 2, 4, 5, 7, 8, 10, 11, 13, 14, 16, 17, 19, 20, 22, 23, 25, 26, 28, 29, 31, and 33), to generate a second even check code.

Then, it is separately determined, by means of comparison, whether the first odd check code is the same as the second odd check code and whether the first even check code is the same as the second even check code. When it is checked that the first odd check code is the same as the second odd check code and the first even check code is the same as the second even check code, it is determined that the data transmission on the bus is secure. When it is checked that the first odd check code is different from the second odd check code or the first even check code is different from the second even check code, an error is reported to a CPU. A parity check mechanism is added. Therefore, when data transmitted on a bus is attacked by a FIB (Focused Ion Beam, focused ion beam), a laser, or the like, whether data transmitted at two ends of the bus is consistent may be checked by means of a parity check, so that the data is prevented from being attacked by an error injection.

Optionally, because a data read manner and a data write manner exist on the bus, a read/write manner of the operation data may be determined according to an input read/write enabling signal. If a data operation manner is writing data, a write processing procedure is performed on the operation data. If a data operation manner is reading data, a read processing procedure is performed on the operation data.

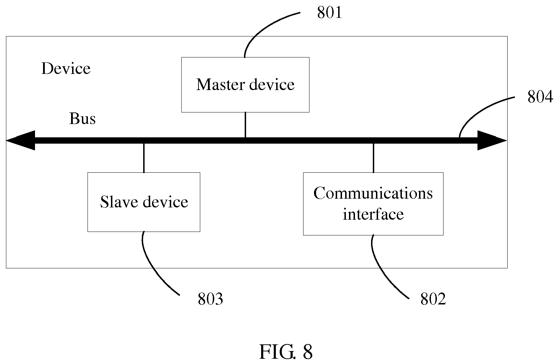

Further referring to FIG. 8, FIG. 8 is a schematic structural diagram of a bus security protection device according to an embodiment of the present invention. As shown in the figure, the device may include a master device 801, a slave device 803, at least one communications interface 802, and at least one bus 804. The bus 804 is configured to implement connections and communication between these components. The communications interface 802 in the device in this embodiment of the present invention is configured to perform signaling or data communication with another node device. The master device 801 and the slave device 803 each may be a high-speed RAM memory, or may be a nonvolatile memory (non-volatile memory), such as at least one magnetic disk storage. Optionally, the slave device 803 may be at least one storage apparatus located far away from the master device 801. The master device 801 and the slave device 803 are configured to execute the method executed by the foregoing bus security protection apparatus, or implement functions implemented by the foregoing bus security protection apparatus.

It should be noted that, for brief description, the foregoing method embodiments are represented as a series of actions. However, persons skilled in the art should appreciate that the present invention is not limited to the described order of the actions, because according to the present invention, some steps may be performed simultaneously or in another order. In addition, persons skilled in the art should also appreciate that all the embodiments described in this specification are optionalembodiments, and the related actions and modules are not necessarily mandatory to the present invention.

In the foregoing embodiments, the descriptions of the embodiments have respective focuses. For a part that is not described in detail in an embodiment, refer to related descriptions in another embodiment.

Persons of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM for short), a random access memory (Random Access Memory, RAM for short), a magnetic disk, an optical disk, or the like.

The foregoing describes in detail the bus security protection apparatus, method, and device that are provided in the embodiments of the present invention. In this specification, specific examples are used to describe the principle and implementations of the present invention, and the description of the embodiments is only intended to help understand the method and core idea of the present invention. Meanwhile, persons of ordinary skill in the art may make modifications with respect to the specific implementations and the application scope based on the idea of the present invention. Therefore, the content of this specification shall not be construed as a limitation to the present invention.

## Claims

1. A bus security protection apparatus, wherein the apparatus comprises a first processing device, a second processing device, and a bus, the first processing device is connected to the second processing device by using the bus, the first processing device and the second processing device each comprise a write processing unit and a read processing unit, the write processing unit comprises a first check module, a first conversion module, and a first encryption/decryption module, and the read processing unit comprises a second check module, a second conversion module, and a second encryption/decryption module, wherein
the first check module is configured to check operation data, to generate a first check code;
the first conversion module is configured to perform an exclusive-OR logical operation on the operation data and a randomly allocated polarity indication signal, to obtain polarity reversal data;
the first encryption/decryption module is configured to perform an exclusive-OR logical operation on the polarity reversal data and preset scrambling data, to obtain encrypted data;
the bus is configured to transmit the first check code, the polarity indication signal, and the encrypted data in the write processing unit of the first processing device to the read processing unit of the second processing device;
the second encryption/decryption module is configured to perform an exclusive-OR logical operation on the encrypted data and the preset scrambling data, to obtain decrypted data;
the second conversion module is configured to perform an exclusive-OR logical operation on the decrypted data and the polarity indication signal, to obtain decrypted conversion data; and
the second check module is configured to: check the decrypted conversion data, to generate a second check code; and determine, when it is checked that the first check code is the same as the second check code, that data transmission on the bus is secure.

2. The apparatus according to claim 1, wherein the write processing unit further comprises a first waveform generator, the first check module comprises a first exclusive-OR gate logic circuit, the first conversion module comprises a first selector and a first polarity reverser, and the first encryption/decryption module comprises a second exclusive-OR gate logic circuit, wherein
an output end of the first waveform generator is separately connected to a first input end and a second input end of the first exclusive-OR gate logic circuit and an input end of the first selector, a first output end of the first selector is connected to an input end of the first polarity reverser, a second output end of the first selector and an output end of the first polarity reverser are separately connected to an input end of the second exclusive-OR gate logic circuit, and an output end of the second exclusive-OR gate logic circuit is connected to an output end of the first exclusive-OR gate logic circuit.

3. The apparatus according to claim 1, wherein the read processing unit further comprises a second waveform generator, the second encryption/decryption module comprises a third exclusive-OR gate logic circuit, the second conversion module comprises a second selector and a second polarity reverser, and the second check module comprises a fourth exclusive-OR gate logic circuit and a third selector, wherein
an output end of the second waveform generator is connected to an input end of the third exclusive-OR gate logic circuit, an output end of the third exclusive-OR gate logic circuit is connected to an input end of the second selector, a first output end of the second selector is connected to an input end of the second polarity reverser, an output end of the second polarity reverser is separately connected to a first input end of the third selector and a first input end and a second input end of the fourth exclusive-OR gate logic circuit, a second output end of the second selector is separately connected to the first input end of the third selector and the first input end and the second input end of the fourth exclusive-OR gate logic circuit, and an output end of the fourth exclusive-OR gate logic circuit is connected to a second input end of the third selector.

4. The apparatus according to claim 1, wherein the first processing device and the second processing device each further comprise:
a read/write enabling unit, configured to determine a read/write manner of the operation data according to an input read/write enabling signal, wherein the read/write enabling unit is separately connected to the write processing unit and the read processing unit.

5. The method according to claim 4, wherein the read/write enabling unit comprises a fourth selector, a fifth selector, a first trigger, and a second trigger, wherein
an output end of the fourth selector is connected to an input end of the fifth selector, a first output end of the fifth selector is connected to one end of the first trigger, the other end of the first trigger is connected to the write processing unit, a second output end of the fifth selector is connected to one end of the second trigger, and the other end of the second trigger is connected to the read processing unit.

6. The apparatus according to any one of claims 1 to 5, wherein the first check code comprises a first odd check code and a first even check code, and the first check module is specifically configured to:
select M bits of the operation data from N bits of the operation data, and perform odd parity check on the M bits of the operation data and the polarity indication signal, to generate the first odd check code, wherein both N and M are positive integers greater than or equal to 1, and M is not greater than N; and
select Q bits of the operation data from the N bits of the operation data, and perform even parity check on the Q bits of the operation data and the polarity indication signal, to generate the first even check code, wherein both N and Q are positive integers greater than or equal to 1, and Q is not greater than N.

7. The apparatus according to claim 6, wherein the second check code comprises a second odd check code and a second even check code, and the second check module is specifically configured to:
select the M bits of the decrypted conversion data from the N bits of the decrypted conversion data, and perform odd parity check on the M bits of the decrypted conversion data and the polarity indication signal, to generate the second odd check code, wherein the M bits of the decrypted conversion data and the M bits of the operation data have a same location in the N-bit sequence; and
select the Q bits of the decrypted conversion data from the N bits of the decrypted conversion data, and perform even parity check on the Q bits of the decrypted conversion data and the polarity indication signal, to generate the second even check code, wherein the Q bits of the decrypted conversion data and the Q bits of the operation data have a same location in the N-bit sequence.

8. The apparatus according to claim 7, wherein the second check module is specifically configured to:
determine, when it is checked that the first odd check code is the same as the second odd check code and the first even check code is the same as the second even check code, that the data transmission on the bus is secure.

9. The apparatus according to claim 6, wherein the bus comprises 3 extended bits, and the 3 bits are respectively used to transmit the first odd check code, the first even check code, and the polarity indication signal.

10. A bus security protection method, wherein the method comprises:
checking operation data, to generate a first check code;
performing an exclusive-OR logical operation on the operation data and a randomly allocated polarity indication signal, to obtain polarity reversal data;
performing an exclusive-OR logical operation on the polarity reversal data and preset scrambling data, to obtain encrypted data;
transmitting the first check code, the polarity indication signal, and the encrypted data in a first processing device to a second processing device by using a bus;
performing an exclusive-OR logical operation on the encrypted data and the preset scrambling data, to obtain decrypted data;
performing an exclusive-OR logical operation on the decrypted data and the polarity indication signal, to obtain decrypted conversion data; and
checking the decrypted conversion data, to generate a second check code; and determining, when it is checked that the first check code is the same as the second check code, that data transmission on the bus is secure.

11. The method according to claim 10, wherein the checking operation data, to generate a first check code comprises:
selecting M bits of the operation data from N bits of the operation data, and performing odd parity check on the M bits of the operation data and the polarity indication signal, to generate a first odd check code, wherein both N and M are positive integers greater than or equal to 1, and M is not greater than N; and
selecting Q bits of the operation data from the N bits of the operation data, and performing even parity check on the Q bits of the operation data and the polarity indication signal, to generate a first even check code, wherein both N and M are positive integers greater than or equal to 1, and M is not greater than N.

12. The method according to claim 11, wherein the checking the decrypted conversion data, to generate a second check code comprises:
selecting the M bits of the decrypted conversion data from the N bits of the decrypted conversion data, and performing odd parity check on the M bits of the decrypted conversion data and the polarity indication signal, to generate a second odd check code, wherein the M bits of the decrypted conversion data and the M bits of the operation data have a same location in the N-bit sequence; and
selecting the Q bits of the decrypted conversion data from the N bits of the decrypted conversion data, and performing even parity check on the Q bits of the decrypted conversion data and the polarity indication signal, to generate a second even check code, wherein the Q bits of the decrypted conversion data and the Q bits of the operation data have a same location in the N-bit sequence.

13. The method according to claim 12, wherein the determining, when it is checked that the first check code is the same as the second check code, that data transmission on the bus is secure comprises:
determining, when it is checked that the first odd check code is the same as the second odd check code and the first even check code is the same as the second even check code, that the data transmission on the bus is secure.

14. The method according to any one of claims 10 to 13, wherein the bus comprises 3 extended bits, and the 3 bits are respectively used to transmit the first odd check code, the first even check code, and the polarity indication signal.

15. A bus security protection device, comprising a master device, a bus, and a slave device, wherein the master device and the slave device are configured to jointly perform the following operations:
checking operation data, to generate a first check code;
performing an exclusive-OR logical operation on the operation data and a randomly allocated polarity indication signal, to obtain polarity reversal data;
performing an exclusive-OR logical operation on the polarity reversal data and preset scrambling data, to obtain encrypted data;
transmitting the first check code, the polarity indication signal, and the encrypted data in a first processing device to a second processing device by using the bus;
performing an exclusive-OR logical operation on the encrypted data and the preset scrambling data, to obtain decrypted data;
performing an exclusive-OR logical operation on the decrypted data and the polarity indication signal, to obtain decrypted conversion data; and
checking the decrypted conversion data, to generate a second check code; and determining, when it is checked that the first check code is the same as the second check code, that data transmission on the bus is secure.

16. The device according to claim 15, wherein the master device and the slave device are further configured to perform the following steps:
selecting M bits of the operation data from N bits of the operation data, and performing odd parity check on the M bits of the operation data and the polarity indication signal, to generate a first odd check code, wherein both N and M are positive integers greater than or equal to 1, and M is not greater than N; and
selecting Q bits of the operation data from the N bits of the operation data, and performing even parity check on the Q bits of the operation data and the polarity indication signal, to generate a first even check code, wherein both N and M are positive integers greater than or equal to 1, and M is not greater than N.

17. The device according to claim 16, wherein the processor is further configured to perform the following steps:
selecting the M bits of the decrypted conversion data from the N bits of the decrypted conversion data, and performing odd parity check on the M bits of the decrypted conversion data and the polarity indication signal, to generate a second odd check code, wherein the M bits of the decrypted conversion data and the M bits of the operation data have a same location in the N-bit sequence; and
selecting the Q bits of the decrypted conversion data from the N bits of the decrypted conversion data, and performing even parity check on the Q bits of the decrypted conversion data and the polarity indication signal, to generate a second even check code, wherein the Q bits of the decrypted conversion data and the Q bits of the operation data have a same location in the N-bit sequence.

18. The device according to claim 17, wherein the processor is further configured to perform the following step:
determining, when it is checked that the first odd check code is the same as the second odd check code and the first even check code is the same as the second even check code, that the data transmission on the bus is secure.

19. The device according to any one of claims 15 to 18, wherein the bus comprises 3 extended bits, and the 3 bits are respectively used to transmit the first odd check code, the first even check code, and the polarity indication signal.
